# EUROPÄISCHE PATENTSCHRIFT

(11) **EP 2 745 011 B1**
(45) Veröffentlichungstag und Bekanntmachung des Hinweises auf die Patenterteilung: **24.05.2017**
(21) Anmeldenummer: 11746524.5
(22) Anmeldetag: 15.08.2011
(51) Int. Cl.: F04B 1/12, F04B 17/03, F04B 17/06, F04B 39/06, F04B 53/08, B08B 3/02, H02K 5/20, H02K 9/19

(54) **MOTORPUMPENEINHEIT**
MOTOR-PUMP-UNIT
GROUPE MOTO-POMPE

(43) Veröffentlichungstag der Anmeldung: 25.06.2014
(73) Patentinhaber: Alfred Kärcher GmbH & Co. KG, 71364 Winnenden (DE)
(72) Erfinder: NATHAN, Robert, 71522 Backnang (DE); GRUBER, Bernhard, 74379 Ingersheim (DE)
(74) Vertreter: Hoeger, Stellrecht & Partner Patentanwälte mbB
(86) Internationale Anmeldenummer: PCT/EP2011/064026
(87) Internationale Veröffentlichungsnummer: WO 2013/023687

(56) Entgegenhaltungen:
- EP-A1- 2 122 166
- DE-A1- 3 603 423
- DE-A1-102009 010 461
- DE-C1- 3 738 592
- DE-U1- 9 417 662

## Beschreibung

Die Erfindung betrifft eine Motorpumpeneinheit für ein Hochdruckreinigungsgerät mit den Merkmalen des Oberbegriffes von Patentanspruch 1.

Mittels derartiger Motorpumpeneinheiten kann eine Reinigungsflüssigkeit, vorzugsweise Wasser, unter Druck gesetzt und anschließend auf einen zu reinigenden Gegenstand gerichtet werden. Hierzu kann an den Druckauslass der Pumpe insbesondere ein Hochdruckschlauch angeschlossen werden, der an seinem freien Ende beispielsweise eine Spritzpistole oder eine Sprühlanze trägt.

Die Kühlung des Elektromotors erfolgt häufig durch einen Luftstrom, der vorzugsweise an der Außenseite des Motorgehäuses vorbeigelenkt wird. Dies erfordert jedoch beträchtliche Wärmetauscherflächen, so dass eine Luftkühlung nur bei räumlich ausgedehnten Motorpumpeneinheiten möglich ist.

In der DE 81 11 792 U1 wird vorgeschlagen, zusätzlich zu einer Luftkühlung auch eine Flüssigkeitskühlung für den Elektromotor vorzusehen. Hierzu ist in die Gehäusewand des Motorgehäuses ein Stahlrohr eingebettet, das den Stator des Elektromotors schraubenlinienförmig umgibt. Das Einbetten eines Stahlrohrs in die Gehäusewand des Motorgehäuses erfordert allerdings einen beträchtlichen Herstellungsaufwand und ist mit beachtlichen Kosten verbunden.

In der DE 35 45 665 C2 wird vorgeschlagen, das Motorgehäuse topfförmig auszubilden und auf das Motorgehäuse eine ebenfalls topfförmig ausgestaltete Kunststoffhaube aufzusetzen unter Ausbildung eines Hohlraumes zwischen dem Motorgehäuse und der Kunststoffhaube. Über einen Einlaufstutzen kann dem Hohlraum Kühlflüssigkeit zugeführt werden, die über einen Auslaufstutzen aus dem Hohlraum abgeführt und anschließend dem Saugeinlass zugeführt werden kann. Bei einer derartigen Ausgestaltung ist das Motorgehäuse von Kühlflüssigkeit umgeben, so dass der Elektromotor auch ohne Bereitstellung einer Luftströmung wirksam gekühlt werden kann und dadurch eine kompakte Bauform aufweisen kann. Allerdings erfordert die Bereitstellung des Hohlraumes für die Kühlflüssigkeit eine zusätzliche Kunststoffhaube, die in einem zusätzlichen Montageschritt auf das Motorgehäuse aufgesetzt werden muss.

Aus der EP 2 122 166 ist eine weitere Motorpumpeneinheit für ein Hochdruckreinigungsgerät bekannt, bei der das Motorgehäuse topfförmig ausgestaltet und in Umfangsrichtung von einem Kühlgehäuse umgeben ist. Zwischen dem Motorgehäuse und dem Kühlgehäuse erstreckt sich ein Kühlkanal, dem die unter Druck zu setzende Flüssigkeit zugeführt werden kann, die anschließend zur Pumpe geleitet wird. Das Kühlgehäuse kann in axialer Richtung auf das Motorgehäuse aufgesetzt werden unter Ausbildung des Kühlkanals zwischen den beiden Gehäusen, die flüssigkeitsdicht miteinander verbindbar sind.

Ein Elektromotor zum Antrieb einer Flüssigkeitspumpe ist aus der DE 37 38 592 C1 bekannt. Das Gehäuse des Elektromotors besteht aus zwei topfförmigen Gehäuseteilen, deren Umfangswände doppelwandig ausgebildet sind. Die beiden Gehäuseteile können in axialer Richtung zusammengefügt und flüssigkeitsdicht miteinander verbunden werden. Im zusammengefügten Zustand bilden die beiden Gehäuseteile im ihrem doppelwandigen Umfangsbereich einen Kühlkanal aus, dem Flüssigkeit zugeführt werden kann. Nach dem Durchströmen des Kühlkanals kann die Flüssigkeit zu der vom Elektromotor angetriebenen Flüssigkeitspumpe geleitet werden.

Aufgabe der vorliegenden Erfindung ist es, eine Motorpumpeneinheit der eingangs genannten Art derart weiterzubilden, dass sie kostengünstiger hergestellt und montiert werden kann, wobei auch im Falle einer Undichtigkeit des Kühlkanals keine Gefährdung des Benutzers vorliegt.

Diese Aufgabe wird durch eine Motorpumpeneinheit mit den Merkmalen von Patentanspruch 1 gelöst.

Bei der Motorpumpeneinheit wird der Kühlkanal durch Zusammenfügen eines ersten und eines zweiten Gehäuseteils des Motorgehäuses gebildet. Das Motorgehäuse weist hierzu ein erstes, vorzugsweise der Pumpe zugewandtes Gehäuseteil auf sowie ein zweites, vorzugsweise der Pumpe abgewandtes Gehäuseteil. Die beiden Gehäuseteile können zur Ausbildung des Motorgehäuses zusammengefügt werden, wobei sie im zusammengefügten Zustand gemeinsam den Kühlkanal ausbilden, dem zur Kühlung Flüssigkeit zugeführt werden kann, die anschließend von der Pumpe unter Druck gesetzt werden kann.

Die Motorpumpeneinheit zeichnet sich durch eine kostengünstige Herstellung und eine einfache Montage aus, denn zur Bereitstellung des Kühlkanals ist es lediglich erforderlich, die beiden Gehäuseteile des Motorgehäuses zusammenzufügen.

Gemäß der Erfindung bilden das erste und das zweite Gehäuseteil zwischen sich einen Drainagekanal aus, der mindestens eine Auslassöffnung aufweist und der zwischen dem Kühlkanal und dem Elektromotor angeordnet ist. Bei der erfindungsgemäßen Ausgestaltung kommt zusätzlich zu dem Kühlkanal ein Drainagekanal zum Einsatz, der ebenso wie der Kühlkanal von den beiden Gehäuseteilen des Motorgehäuses ausgebildet wird. Der Kühlkanal ist an der radialen Außenseite des Drainagekanals angeordnet. Dies hat den Vorteil, dass im Falle einer Undichtigkeit des Kühlkanals Flüssigkeit nicht unmittelbar zu den spannungsführenden Bauteilen des Elektromotors gelangen kann. Im Falle einer Undichtigkeit des Kühlkanals gelangt die Flüssigkeit vielmehr entweder unmittelbar in den das Motorgehäuse umgebenden Außenraum, oder aber sie strömt in den Drainagekanal, der zwischen dem Kühlkanal und dem Elektromotor angeordnet ist, und kann anschließend über die mindestens eine Auslassöffnung des Drainagekanals in den den Elektromotor umgebenden Außenraum gelangen und dort vom Benutzer erkannt werden. Auch im Falle einer Undichtigkeit des Kühlkanals hat die den Kühlkanal durchströmende Flüssigkeit somit keinen unmittelbaren Zugang zu den spannungsführenden Bauteilen des Elektromotors, so dass auch im Falle einer Undichtigkeit des Kühlkanals eine Gefährdung des Benutzers zuverlässig ausgeschlossen werden kann. Eine derartige Undichtigkeit könnte beispielsweise durch Korrosion der Wandung des Kühlkanals verursacht werden.

Der Kühlkanal weist einen Einlass und einen Auslass auf. Über den Einlass kann dem Kühlkanal Flüssigkeit zugeführt werden. An den Einlass kann beispielsweise ein Versorgungsschlauch angeschlossen werden. Der Auslass kann über eine Verbindungsleitung mit dem Saugeinlass der Pumpe verbunden werden, so dass die über den Einlass dem Kühlkanal zugeführte Flüssigkeit über den Auslass aus dem Kühlkanal herausströmen kann und anschließend dem Saugeinlass der Pumpe zugeführt werden kann.

Bevorzugt verläuft der Kühlkanal in Umfangsrichtung des Elektromotors. Der Kühlkanal kann den Elektromotor in Umfangsrichtung umgeben.

Zur strömungsdichten Verbindung des ersten Gehäuseteils mit dem zweiten Gehäuseteil kommt vorteilhafterweise mindestens ein Dichtungselement zum Einsatz, das zwischen dem ersten Gehäuseteil und dem zweiten Gehäuseteil angeordnet ist. Das Dichtungselement kann beispielsweise in Form eines O-Ringes ausgestaltet sein.

Von Vorteil ist es, wenn zwischen dem ersten Gehäuseteil und dem zweiten Gehäuseteil zwei Dichtungselemente angeordnet sind, die den Elektromotor jeweils in Umfangsrichtung vollständig umgeben und die den Kühlkanal an einer radialen Außenseite und einer radialen Innenseite abdichten.

Eine besonders einfache Montage wird bei einer vorteilhaften Ausführungsform der erfindungsgemäßen Motorpumpeneinheit dadurch erzielt, dass das erste und das zweite Gehäuseteil bezogen auf die Längsachse des Elektromotors in axialer Richtung zusammenfügbar sind unter Ausbildung des Kühlkanals.

Günstig ist es, wenn zumindest eines der beiden Gehäuseteile topfförmig ausgestaltet ist und mit seiner freien Stirnseite gegen das andere Gehäuseteil gerichtet ist.

Von besonderem Vorteil ist es, wenn sowohl das erste Gehäuseteil als auch das zweite Gehäuseteil topfförmig ausgebildet sind und die beiden Gehäuseteile mit ihren freien Stirnseiten gegeneinander gerichtet sind.

Sind die beiden Gehäuseteile axial zusammenfügbar, so kann zumindest eines der beiden Gehäuseteile dem anderen Gehäuseteil zugewandt stirnseitig eine den Elektromotor in Umfangsrichtung umgebende ringförmige Aufnahme ausbilden, die im zusammengefügten Zustand der beiden Gehäuseteile vom anderen Gehäuseteil flüssigkeitsdicht abgedeckt wird unter Ausbildung des Kühlkanals.

Von Vorteil ist es, wenn das erste und/oder das zweite Gehäuseteil ein Lagerschild ausbilden, an dem eine Motorwelle des Elektromotors drehbar gelagert ist.

Von besonderem Vorteil ist es, wenn sowohl das erste Gehäuseteil als auch das zweite Gehäuseteil jeweils ein Lagerschild ausbilden, an dem die Motor-welle drehbar gelagert ist. Die Lagerschilde können eine Aufnahme aufweisen, die ein Lager, vorzugsweise ein Kugellager, für die Motorwelle aufnimmt.

Bevorzugt sind das erste Gehäuseteil und/oder das zweite Gehäuseteil auf einen Stator des Elektromotors aufgeschrumpft.

Es kann vorgesehen sein, dass beide Gehäuseteile auf den Stator des Elektromotors aufgeschrumpft sind.

Alternativ kann vorgesehen sein, dass lediglich das erste Gehäuseteil oder lediglich das zweite Gehäuseteil auf den Stator aufgeschrumpft ist. Das Aufschrumpfen von nur einem der beiden Gehäuseteile hat eine weitere Vereinfachung der Montage der erfindungsgemäßen Motorpumpeneinheit zur Folge.

Günstig ist es, wenn das erste Gehäuseteil und/oder das zweite Gehäuseteil eine den Elektromotor in Umfangsrichtung umgebende Seitenwand und eine den Elektromotor stirnseitig überdeckende Bodenwand aufweist, wobei ein dem Kühlkanal benachbarter Bereich der Seitenwand eine größere Wandstärke aufweist als die Bodenwand. Eine derartige Ausgestaltung hat den Vorteil, dass das Motorgehäuse in dem dem Kühlkanal benachbarten Bereich eine verhältnismäßig große Wandstärke aufweist, die dem Motorgehäuse eine große Wärmeleitfähigkeit verleiht, so dass Abwärme des Elektromotors über den Bereich der Seitenwand mit größerer Wandstärke besonders wirksam zum Kühlkanal geleitet werden kann, von dem aus die Abwärme über die den Kühlkanal durchströmende Flüssigkeit abgeführt werden kann. In Bereichen des Motorgehäuses, die einen größeren Abstand zum Kühlkanal aufweisen, ist dagegen die Wandstärke des Motorgehäuses geringer gehalten. Dadurch kann das Gewicht des Motorgehäuses reduziert werden und die Materialmenge, die zur Herstellung des Motorgehäuses zum Einsatz kommt, kann ebenfalls reduziert werden. Dies verringert die Herstellungskosten.

Von besonderem Vorteil ist es, wenn sowohl das erste Gehäuseteil als auch das zweite Gehäuseteil eine den Elektromotor in Umfangsrichtung umgebende Seitenwand und eine den Elektromotor stirnseitig überdeckende Bodenwand aufweisen, wobei beide Gehäuseteile in einem dem Kühlkanal benachbarten Bereich der Seitenwand eine größere Materialstärke aufweisen als im Bereich ihrer jeweiligen Bodenwand.

Zur Bereitstellung des Kühlkanals weisen das erste und das zweite Gehäuseteil bei einer vorteilhaften Ausführungsform der Erfindung jeweils eine Kühlkanalwand auf, wobei die Kühlkanalwände beim Zusammenfügen der beiden Gehäuseteile flüssigkeitsdicht miteinander verbindbar sind und zwischen sich den Kühlkanal ausbilden. Die beiden Kühlkanalwände begrenzen den Kühlkanal, den sie zwischen sich ausbilden. Werden die beiden Gehäuseteile zusammengefügt, so liegen die Kühlkanalwände, vorzugsweise unter Zwischenlage von mindestens einem Dichtungselement, flüssigkeitsdicht aneinander an.

Zumindest eine Kühlkanalwand ist günstigerweise rinnenförmig ausgestaltet. Es kann vorgesehen sein, dass nur die Kühlkanalwand von einem der beiden Gehäuseteile eine rinnenförmige Ausgestaltung aufweist, wohingegen die andere Kühlkanalwand lediglich einen Deckel ausbildet, der die rinnenförmige Kanalwand flüssigkeitsdicht abdeckt. Alternativ kann vorgesehen sein, dass beide Gehäuseteile jeweils eine rinnenförmige Kühlkanalwand ausbilden, wobei die rinnenförmigen Kühlkanalwände beim Zusammenfügen der beiden Gehäuseteile, günstigerweise unter Zwischenlage von mindestens einem Dichtungselement, stirnseitig aneinander anliegen.

Günstigerweise ist zwischen dem Kühlkanal und dem Drainagekanal zumindest ein Dichtelement angeordnet, beispielsweise ein O-Ring. Sollte das zwischen dem Kühlkanal und dem Drainagekanal angeordnete Dichtelement seine Dichtigkeit verlieren, so führt dies lediglich dazu, dass Flüssigkeit aus dem Kühlkanal in den Drainagekanal strömen kann. Da der Drainagekanal mindestens eine Auslassöffnung aufweist, gelangt die Flüssigkeit im Falle einer Undichtigkeit des Dichtelementes in den den Elektromotor umgebenden Außenraum und kann dann vom Benutzer erkannt werden.

Das erste und das zweite Gehäuseteil weisen bei einer bevorzugten Ausgestaltung der Erfindung jeweils eine Drainagekanalwand auf, wobei die Drainagekanalwände beim Zusammenfügen der beiden Gehäuseteile flüssigkeitsdicht miteinander verbindbar sind und zwischen sich den Drainagekanal ausbilden.

Günstig ist es, wenn die beiden Drainagekanalwände einander in axialer Richtung überlappen. Beispielsweise kann vorgesehen sein, dass die beiden Drainagekanalwände jeweils einen radialen Wandabschnitt und einen axialen Wandabschnitt umfassen, wobei die radialen Wandabschnitte in axialer Richtung im Abstand zueinander angeordnet sind und die axialen Wandabschnitte in radialem Abstand zueinander angeordnet sind. Der axiale Wandabschnitt von einem der beiden Gehäuseteile umgibt hierbei den axialen Wandabschnitt des anderen Gehäuseteiles. Zwischen den axialen und radialen Wandabschnitten erstreckt sich ein Ringraum, der den Drainagekanal ausbildet.

Das erste Gehäuseteil und /oder das zweite Gehäuseteil sind vorzugsweise aus Metall gefertigt. Insbesondere kann vorgesehen sein, dass beide Gehäuseteile als Aluminium- oder Zinkdruckgussteile ausgebildet sind. Dies ermöglicht eine kostengünstige Herstellung des Motorgehäuses und hat darüber hinaus den Vorteil, dass Abwärme des Elektromotors besonders wirksam an die den Kühlkanal durchströmende Flüssigkeit abgeführt werden kann.

Die nachfolgende Beschreibung einer bevorzugten Ausführungsform der Erfindung dient im Zusammenhang mit der Zeichnung der näheren Erläuterung. Es zeigen:
- Figur 1:: eine teilweise geschnittene Seitenansicht einer erfindungsgemäßen Motorpumpeneinheit, und
- Figur 2:: eine teilweise aufgetrennte perspektivische Darstellung der Motorpumpeneinheit aus Figur 1.

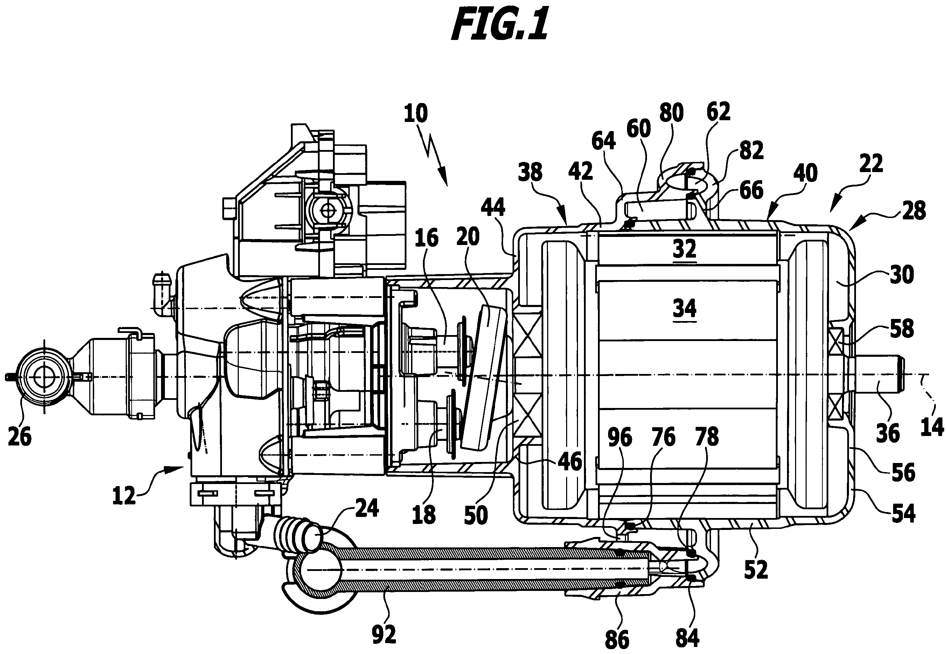

In der Zeichnung ist schematisch eine erfindungsgemäße Motorpumpeneinheit 10 dargestellt, die bei Hochdruckreinigungsgeräten zum Einsatz kommt. Sie umfasst eine Pumpe 12, die in der dargestellten Ausführungsform als Kolbenpumpe ausgebildet ist und mehrere parallel zur Längsachse 14 der Motorpumpeneinheit 10 hin und her bewegbare Kolben aufweist. In Figur 1 sind ein erster Kolben 16 und ein zweiter Kolben 18 dargestellt. Die Kolben 16, 18 liegen an einer Taumelscheibe 20 an, die von einem Elektromotor 22 in Drehung versetzt wird. Die Kolben 16, 18 tauchen in üblicher Weise jeweils in einen in der Zeichnung zur Erzielung einer bessern Übersicht nicht dargestellten Pumpraum ein, so dass bei der Hin- und Herbewegung der Kolben 16, 18 Flüssigkeit, die von der Pumpe 12 unter Druck gesetzt werden soll, von einem Saugeinlass 24 der Pumpe 12 angesaugt und über einen Druckauslass 26 der Pumpe abgegeben werden kann. An den Druckauslass 26 kann in üblicher Weise ein in der Zeichnung nicht dargestellter Druckschlauch angeschlossen werden, der an seinem freien Ende beispielsweise eine Spritzpistole oder eine Sprühlanze trägt. Dies gibt einem Benutzer die Möglichkeit, die unter Druck gesetzte Flüssigkeit zur Reinigung auf einen Gegenstand zu richten.

Der Elektromotor 22 umfasst ein Motorgehäuse 28, das einen Innenraum 30 umgibt. Im Innenraum 30 ist ein Stator 32 des Elektromotors 22 angeordnet, der in üblicher Weise einen Rotor 34 des Elektromotors 22 umgibt. Der Rotor 34 ist drehfest an einer kolinear zur Längsachse 14 ausgerichteten Motorwelle 36 gehalten. Über die Motorwelle 36 kann die Taumelscheibe 20, wie voranstehend bereits erläutert, in Drehung gesetzt werden zum Antrieb der Pumpe 12.

Das Motorgehäuse 28 ist zweiteilig ausgebildet. Es umfasst ein erstes Gehäuseteil 38, das der Pumpe 12 zugewandt ist, und ein zweites Gehäuseteil 40, das der Pumpe 12 abgewandt ist. Das erste Gehäuseteil 38 ist topfförmig ausgestaltet und umfasst eine erste Seitenwand 42, die von einer ersten Bodenwand 44 in Richtung auf das zweite Gehäuseteil 40 absteht. Die erste Bodenwand 44 bildet ein erstes Lagerschild 46 aus, an dem die Motorwelle 36 mit Hilfe eines ersten Lagers 50 drehbar gelagert ist.

Das zweite Gehäuseteil 40 ist ebenfalls topfförmig ausgestaltet und umfasst eine den Stator 32 in Umfangsrichtung umgebende zweite Seitenwand 52, die in axialer Richtung, dem ersten Gehäuseteil 38 zugewandt, von einer zweiten Bodenwand 54 des zweiten Gehäuseteiles 40 absteht. Die zweite Bodenwand 54 bildet ein zweites Lagerschild 56 aus, an dem die Motorwelle 36 über ein zweites Lager 58 drehbar gelagert ist.

Das erste Gehäuseteil 38 bildet in Kombination mit dem zweiten Gehäuseteil 40 einen den Elektromotor 22 in Umfangsrichtung umgebenden Drainagekanal 60 sowie einen den Elektromotor 22 in Umfangsrichtung umgebenden Kühlkanal 62. Der Drainagekanal 60 ist in radialer Richtung zwischen dem Kühlkanal 62 und dem Elektromotor 22 angeordnet. Er wird von einer ersten Drainagekanalwand 64 des ersten Gehäuseteils 38 und einer zweiten Drainagekanalwand 66 des zweiten Gehäuseteiles 40 gebildet. Die erste Drainagekanalwand 64 umfasst einen bezogen auf die Längsachse 14 der Motorpumpeneinheit 10 radial ausgerichteten radialen Wandabschnitt 68, an den sich ein axialer Wandabschnitt 70 anschließt. In entsprechender Weise umfasst die zweite Drainagekanalwand 66 einen radialen Wandabschnitt 72 und einen axialen Wandabschnitt 74. Der axiale Wandabschnitt 70 der ersten Drainagekanalwand 64 umgibt den axialen Wandabschnitt 74 der zweiten Drainagekanalwand 66 unter Ausbildung eines Ringraumes in Form des Drainagekanals 60. Der Drainagekanal 60 wird somit in axialer Richtung von den beiden radialen Wandabschnitten 68 und 72 und in radialer Richtung von den beiden axialen Wandabschnitten 70 und 74 begrenzt. Zwischen dem axialen Wandabschnitt 74 der zweiten Drainagekanalwand 66 und dem radialen Wandabschnitt 68 der ersten Drainagekanalwand 64 ist ein erstes Dichtelement in Form eines ersten Dichtringes 76 angeordnet und zwischen dem radialen Wandabschnitt 72 der zweiten Drainagekanalwand 66 und dem axialen Wandabschnitt 70 der ersten Drainagekanalwand 64 ist ein zweites Dichtelement in Form eines zweiten Dichtringes 78 angeordnet. Mit Hilfe der beiden Dichtringe 76 und 78 wird der Drainagekanal 60 flüssigkeitsdicht abgedichtet.

Der Kühlkanal 62 wird in der dargestellten Ausführungsform von einer rinnenförmigen ersten Kühlkanalwand 80 des ersten Gehäuseteiles 38 und einer rinnenförmigen zweiten Kühlkanalwand 82 des zweiten Gehäuseteiles 40 gebildet. Die erste Kühlkanalwand 80 schließt sich in radialer Richtung an den axialen Wandabschnitt 70 der ersten Drainagekanalwand 64 an, und die zweite Kühlkanalwand 82 schließt sich in radialer Richtung an den radialen Wandabschnitt 72 der zweiten Drainagekanalwand 66 an. Ein drittes Dichtelement in Form eines dritten Dichtringes 84 ist in radialem Abstand zum zweiten Dichtring 78 zwischen der ersten Kühlkanalwand 80 und der zweiten Kühlkanalwand 82 angeordnet. Der Kühlkanal 62 wird somit vom zweiten Dichtring 78 und dem dritten Dichtring 84 abgedichtet.

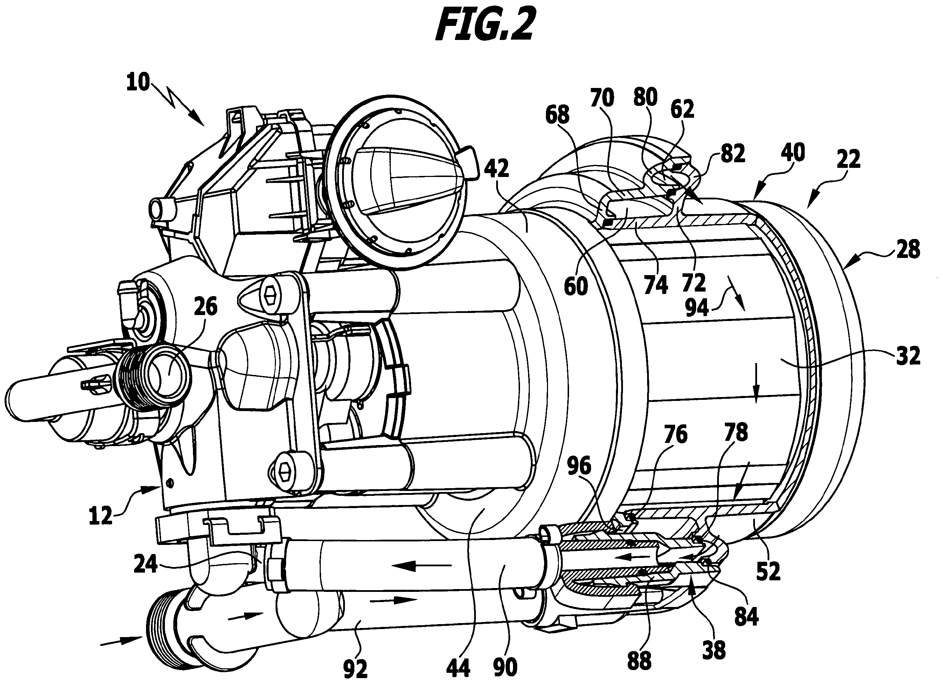

Über einen in Figur 1 dargestellten Kühlkanaleinlass 86 kann dem Kühlkanal 62 Flüssigkeit zugeführt werden, die den Kühlkanal 62 durchströmt und über einen in Figur 2 dargestellten Kühlkanalauslass 88 abgegeben werden kann. An den Kühlkanalauslass 88 ist eine Verbindungsleitung 90 angeschlossen, die den Kühlkanalauslass 88 mit dem Saugeinlass 24 der Pumpe 12 verbindet. An den Kühlkanaleinlass 86 ist eine Einlassleitung 92 angeschlossen, an die eine Versorgungsleitung, beispielsweise ein Schlauch, angeschlossen werden kann. Somit kann Flüssigkeit, die von der Pumpe 12 unter Druck gesetzt werden soll, über die Einlassleitung 92, den Kühlkanal 62 und die Verbindungsleitung 90 der Pumpe 12 zugeführt, von dieser unter Druck gesetzt und anschließend über den Druckauslass 26 abgegeben werden. Die Strömungsrichtung der Flüssigkeit ist in Figur 2 durch die Pfeile 94 veranschaulicht. Die den Kühlkanal 62 durchströmende Flüssigkeit nimmt Abwärme des Elektromotors 22 auf, so dass dieser wirksam gekühlt werden kann. Um die Wärmeleitfähigkeit des Motorgehäuses 28 zu verbessern, ist die Wandstärke der zweiten Seitenwand 52 und der ersten Seitenwand 42 in dem sich an den Drainagekanal 60 und den Kühlkanal 62 angrenzenden Bereich größer gewählt als die Wandstärke der ersten Bodenwand 44 und der zweiten Bodenwand 54. Dies wird insbesondere aus Figur 1 deutlich.

Der Drainagekanal 60 weist im Bereich des radialen Wandabschnittes 68 der ersten Drainagekanalwand 64 mehrere Auslassöffnungen auf, wobei in der Zeichnung eine Auslassöffnung 96 erkennbar ist. Kommt es im Bereich des Kühlkanals 62 zu einer Undichtigkeit des Motorgehäuses 28, so gelangt die den Kühlkanal 62 durchströmende Flüssigkeit entweder unmittelbar in den den Elektromotor 22 umgebenden Außenraum, so dass sie vom Benutzer erkannt werden kann, der daraufhin die Motorpumpeneinheit 10 außer Betrieb setzen kann, oder aber die Flüssigkeit gelangt in den Drainagekanal 60, von dem aus sie über die Auslassöffnungen 96 wiederum in den den Elektromotor 22 umgebenden Außenraum herausströmen kann. Somit ist durch den zwischen dem Kühlkanal 62 und dem Elektromotor 22 angeordneten Drainagekanal 60 sichergestellt, dass auch im Falle einer Undichtigkeit des Kühlkanals 62 keine Flüssigkeit in den Innenraum 30 des Motorgehäuses 28 gelangen kann. Eine Gefährdung des Benutzers durch Flüssigkeit, die spannungsführende Teile des Elektromotors 22 kontaktiert, ist somit ausgeschlossen. Kommt es beispielsweise zu einer Undichtigkeit des zweiten Dichtringes 78, so strömt Flüssigkeit aus dem Kühlkanal 62 lediglich in den Drainagekanal 60, nicht aber in den Innenraum 30 des Motorgehäuses 28.

Zur Montage des Elektromotors 22 können das erste Gehäuseteil 38 und das zweite Gehäuseteil 40 einander entgegengerichtet auf den Stator 32 des Elektromotors 22 aufgeschrumpft werden, wobei sie unter Zwischenlage des ersten Dichtringes 76, des zweiten Dichtringes 78 und des dritten Dichtringes 84 stirnseitig flüssigkeitsdicht aneinander anliegen unter Ausbildung des Drainagekanals 60 und des Kühlkanals 62. Die Montage gestaltet sich somit sehr einfach.

## Patentansprüche

1. Motorpumpeneinheit (10) für ein Hochdruckreinigungsgerät, mit einem Elektromotor (22), der ein Motorgehäuse (28) aufweist, an dessen Außenseite ein Kühlkanal (62) angeordnet ist, und mit einer vom Elektromotor (22) angetriebenen Pumpe (12), die einen Saugeinlass (24) zum Ansaugen von unter Druck zu setzender Flüssigkeit und einen Druckauslass (26) zum Abgeben von unter Druck gesetzter Flüssigkeit aufweist, wobei unter Druck zu setzende Flüssigkeit über den Kühlkanal (62) dem Saugeinlass (24) zuführbar ist und wobei das Motorgehäuse (28) ein erstes und ein zweites Gehäuseteil (38, 40) aufweist, die flüssigkeitsdicht miteinander verbindbar sind und zwischen sich den Kühlkanal (62) ausbilden, **dadurch gekennzeichnet, dass** das erste Gehäuseteil (38) und das zweite Gehäuseteil (40) zwischen sich einen Drainagekanal (60) ausbilden, der mindestens eine Auslassöffnung (96) aufweist und zwischen dem Kühlkanal (62) und dem Elektromotor (22) angeordnet ist.

2. Motorpumpeneinheit nach Anspruch 1, **dadurch gekennzeichnet, dass** das erste und das zweite Gehäuseteil (38, 40) bezogen auf die Längsachse (14) der Motorpumpeneinheit (10) in axialer Richtung zusammenfügbar sind unter Ausbildung des Kühlkanals (62).

3. Motorpumpeneinheit nach Anspruch 1 oder 2, **dadurch gekennzeichnet, dass** das erste Gehäuseteil (38) und/oder das zweite Gehäuseteil (40) ein Lagerschild (46, 56) ausbildet, an dem eine Motorwelle (36) des Elektromotors (22) drehbar gelagert ist.

4. Motorpumpeneinheit nach einem der voranstehenden Ansprüche, **dadurch gekennzeichnet, dass** das erste Gehäuseteil (38) und/oder das zweite Gehäuseteil (40) auf einen Stator (32) des Elektromotors (22) aufgeschrumpft ist.

5. Motorpumpeneinheit nach einem der voranstehenden Ansprüche, **dadurch gekennzeichnet, dass** das erste Gehäuseteil (38) und/oder das zweite Gehäuseteil (40) eine den Elektromotor (22) in Umfangsrichtung umgebende Seitenwand (42, 52) und eine den Elektromotor (22) stirnseitig überdeckende Bodenwand (44, 54) aufweisen, wobei ein dem Kühlkanal (62) benachbarter Bereich der Seitenwand (42, 52) eine größere Wandstärke aufweist als die Bodenwand (44, 54).

6. Motorpumpeneinheit nach einem der voranstehenden Ansprüche, **dadurch gekennzeichnet, dass** das erste Gehäuseteil (38) und das zweite Gehäuseteil (40) jeweils eine Kühlkanalwand (80, 82) aufweisen, wobei die Kühlkanalwände (80, 82) beim Zusammenfügen der beiden Gehäuseteile (38, 40) flüssigkeitsdicht miteinander verbindbar sind und zwischen sich den Kühlkanal (62) ausbilden.

7. Motorpumpeneinheit nach Anspruch 6, **dadurch gekennzeichnet, dass** zumindest eine Kühlkanalwand (80, 82) rinnenförmig ausgestaltet ist.

8. Motorpumpeneinheit nach einem der voranstehenden Ansprüche, **dadurch gekennzeichnet, dass** zwischen dem Kühlkanal (62) und dem Drainagekanal (60) zumindest ein Dichtelement (78) angeordnet ist.

9. Motorpumpeneinheit nach einem der voranstehenden Ansprüche, **dadurch gekennzeichnet, dass** das erste Gehäuseteil (38) und das zweite Gehäuseteil (40) jeweils eine Drainagekanalwand (64, 66) aufweisen, wobei die Drainagekanalwände (64, 66) beim Zusammenfügen der beiden Gehäuseteile (38, 40) flüssigkeitsdicht miteinander verbindbar sind und zwischen sich den Drainagekanal (60) ausbilden.

10. Motorpumpeneinheit nach Anspruch 9, **dadurch gekennzeichnet, dass** die beiden Drainagekanalwände (64, 66) einander in axialer Richtung überlappen.

11. Motorpumpeneinheit nach einem der voranstehenden Ansprüche, **dadurch gekennzeichnet, dass** das erste Gehäuseteil (38) und/oder das zweite Gehäuseteil (40) aus Metall gefertigt sind.

## Claims

1. Motor-pump unit (10) for a high-pressure cleaning appliance with an electric motor (22) having a motor housing (28), on the outside of which a cooling channel (62) is arranged, and with a pump (12) driven by the electric motor (22) and having a suction inlet (24) for taking in liquid to be pressurized and a pressure outlet (26) for discharging pressurized liquid, wherein liquid to be pressurized can be fed by way of the cooling channel (62) to the suction inlet (24), and wherein the motor housing (28) comprises a first housing part and a second housing part (38, 40), which are connectable to each other in a liquid-tight manner and between them form the cooling channel (62), **characterized in that** the first housing part (38) and the second housing part (40) form between them a drainage channel (60) which has at least one outlet opening (96) and is arranged between the cooling channel (62) and the electric motor (22).

2. Motor-pump unit in accordance with claim 1, **characterized in that** the first housing part and the second housing part (38, 40) can be joined together in the axial direction in relation to the longitudinal axis (14) of the motor-pump unit (10), thereby forming the cooling channel (62).

3. Motor-pump unit in accordance with claim 1 or 2, **characterized in that** the first housing part (38) and/or the second housing part (40) form/forms a bearing shield (46, 56) on which a motor shaft (36) of the electric motor (22) is mounted for rotation.

4. Motor-pump unit in accordance with any one of the preceding claims, **characterized in that** the first housing part (38) and/or the second housing part (40) is/are shrunk onto a stator (32) of the electric motor (22).

5. Motor-pump unit in accordance with any one of the preceding claims, **characterized in that** the first housing part (38) and/or the second housing part (40) comprise/comprises a side wall (42, 52) surrounding the electric motor (22) in the circumferential direction and a bottom wall (44, 54) covering the electric motor (22) at an end face, with an area of the side wall (42, 52) that is adjacent to the cooling channel (62) having a larger wall thickness than the bottom wall (44, 54).

6. Motor-pump unit in accordance with any one of the preceding claims, **characterized in that** the first housing part (38) and the second housing part (40) each comprise a cooling channel wall (80, 82), the cooling channel walls (80, 82) being connectable to each other in a liquid-tight manner and forming between them the cooling channel (62) when the two housing parts (38, 40) are joined together.

7. Motor-pump unit in accordance with claim 6, **characterized in that** at least one cooling channel wall (80, 82) is of groove-shaped configuration.

8. Motor-pump unit in accordance with any one of the preceding claims, **characterized in that** at least one sealing element (78) is arranged between the cooling channel (62) and the drainage channel (60).

9. Motor-pump unit in accordance with any one of the preceding claims, **characterized in that** the first housing part (38) and the second housing part (40) each comprise a drainage channel wall (64, 66), the drainage channel walls (64, 66) being connectable to each other in a liquid-tight manner and forming between them the drainage channel (60) when the two housing parts (38, 40) are joined together.

10. Motor-pump unit in accordance with claim 9, **characterized in that** the two drainage channel walls (64, 66) overlap each other in the axial direction.

11. Motor-pump unit in accordance with any one of the preceding claims, **characterized in that** the first housing part (38) and/or the second housing part (40) is/are made of metal.

## Revendications

1. Unité motopompe (10) pour un appareil de nettoyage à haute pression, comprenant un moteur électrique (22) qui comporte un carter de moteur (28) sur la face extérieure duquel est disposé un canal de refroidissement (62), et une pompe (12) qui est entraînée par le moteur électrique (22) et qui comporte une entrée d'aspiration (24) destinée à aspirer un liquide à mettre sous pression et un orifice de sortie sous pression (26) destiné à distribuer le liquide mis sous pression, le liquide à mettre sous pression pouvant être amené à l'entrée d'aspiration (24) par l'intermédiaire du canal de refroidissement (62) et le carter de moteur (28) comprenant une première et une deuxième partie de carter (38, 40), qui peuvent être reliées l'une à l'autre de manière étanche au fluide et qui constituent entre elles le canal de refroidissement (62), **caractérisée en ce que** la première partie de carter (38) et la deuxième partie de carter (40) constituent entre elles un canal de drainage (60), qui comprend au moins une ouverture d'évacuation (96) et qui est agencé entre le canal de refroidissement (62) et le moteur électrique (22).

2. Unité motopompe selon la revendication 1, **caractérisée en ce que** la première et la deuxième partie de carter (38, 40) peuvent être assemblées dans la direction axiale par rapport à l'axe longitudinal (14) de l'unité motopompe (10), ce qui permet de constituer le canal de refroidissement (62).

3. Unité motopompe selon la revendication 1 ou 2, **caractérisée en ce que** la première partie de carter (38) et/ou la deuxième partie de carter (40) constituent un flasque (46, 56) sur lequel un arbre de moteur (36) du moteur électrique (22) est monté en rotation.

4. Unité motopompe selon l'une quelconque des revendications précédentes, **caractérisée en ce que** la première partie de carter (38) et/ou la deuxième partie de carter (40) sont frettées sur un stator (32) du moteur électrique (22).

5. Unité motopompe selon l'une quelconque des revendications précédentes, **caractérisée en ce que** la première partie de carter (38) et/ou la deuxième partie de carter (40) comprennent une paroi latérale (42, 52) entourant le moteur électrique (22) dans la direction périphérique et une paroi inférieure (44, 54) recouvrant frontalement le moteur électrique (22), une zone de la paroi latérale (42, 52) voisine du canal de refroidissement (62) présentant une épaisseur de paroi plus grande que celle de la paroi inférieure (44, 54).

6. Unité motopompe selon l'une quelconque des revendications précédentes, **caractérisée en ce que** la première partie de carter (38) et la deuxième partie de carter (40) présentent chacune une paroi de canal de refroidissement (80, 82), les parois de canal de refroidissement (80, 82), lorsque les deux parties de carter (38, 40) sont assemblées, pouvant être reliées l'une à l'autre de manière étanche au fluide et constituant entre elles le canal de refroidissement (62).

7. Unité motopompe selon la revendication 6, **caractérisée en ce qu'**au moins une paroi de canal de refroidissement (80, 82) est en forme de rigole.

8. Unité motopompe selon l'une quelconque des revendications précédentes, **caractérisée en ce qu'**au moins un élément d'étanchéité (78) est agencé entre le canal de refroidissement (62) et le canal de drainage (60).

9. Unité motopompe selon l'une quelconque des revendications précédentes, **caractérisée en ce que** la première partie de carter (38) et la deuxième partie de carter (40) comprennent chacune une paroi de canal de drainage (64, 66), les parois de canal de drainage (64, 66), lorsque les deux parties de carter (38, 40) sont assemblées l'une à l'autre, pouvant être reliées l'une à l'autre de manière étanche au fluide et constituant entre elles le canal de drainage (60).

10. Unité motopompe selon la revendication 9, **caractérisée en ce que** les deux parois de canal de drainage (64, 66) se chevauchent mutuellement dans la direction axiale.

11. Unité motopompe selon l'une quelconque des revendications précédentes, **caractérisée en ce que** la première partie de carter (38) et/ou la deuxième partie de carter (40) sont fabriquées en métal.
